# EUROPEAN PATENT SPECIFICATION

(11) **EP 0 788 861 B1**
(45) Date of publication and mention of the grant of the patent: **03.05.2000**
(21) Application number: 97200313.1
(22) Date of filing: 06.02.1997
(51) Int. Cl.: B23Q 1/54, B23Q 1/48

(54) **A multi-degree-of-freedom table support unit, and a multi-degree-of-freedom table mechanism.**
Unterstützungseinheit und Mechanismus für einen Tisch mit mehreren Freiheitsgraden
Unité de support et mécanisme pour une table avec plusieurs degrés de liberté

(30) Priority: 07.02.1996 JP 2081796
(43) Date of publication of application: 13.08.1997
(73) Proprietor: Hihaisuto Seiko Co Ltd, Itabashi-Ward, Tokyo (JP)
(72) Inventor: Hirose, Kazuya, Shinjuku-Ward, Tokyo (JP)
(74) Representative: Vollebregt, Cornelis Jacobus, Ir.

(56) References cited:
- DE-C- 4 307 036
- US-A- 5 031 547

## Description

The present invention relates to a multi-degree-of-freedom table support unit, and a multi-degree-of-freedom table mechanism which can be applied to precision measuring instruments, precision processing machines, precision positioning apparatuses, etc.

In a so-called X-Y moving table in which a stage can be moved against a support frame lengthwise and crosswise, i.e., in the first and second axial directions perpendicular to each other, a pair of one-axis motion mechanisms, each consisting of a pair of straight motion guide bearings and one feed screw mechanism, are placed one on the other with their moving directions kept perpendicular to each other, to allow the above mentioned movement.

In an X-Y-Z moving table which allows movement also in the third axial direction perpendicular to the first and second axial directions, i.e., height direction, in addition to the lengthwise and crosswise movement as mentioned above, a third one-axis motion mechanism for the third axial direction is also overlapped, To allow rotation, a θ-axis motion mechanism can be combined, and to allow the stage to be tilted, such a motion mechanism can be combined.

The above constitution has such problems as (a) the number of parts is large, (b) the height from the support frame to the stage is unstably high, (c) the mechanism occupies a large space, (d) assembling requires many manhours, (e) it is relatively difficult to achieve a high assembling accuracy, and so on.

From US-A-5031547 there is known a multi-degree-of-freedom table support unit, comprising a lengthwise and crosswise motion mechanism with two outer support plates integrally combined with an inner support plate held between them, and with bearings installed between the inner support plate and the respective outer support plates.

The object of the present invention to solve the above mentioned problems.

To solve the above problems, the present invention proposes a multi-degree-of-freedom table support unit, comprising a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; a rod installed in an opening formed in at least either of the outer support plates, with its tip connected with the spherical body; and a straight motion bearing mechanism for back-and-forth movable supporting the rod.

The present invention also provides a multi-degree-of-freedom table mechanism for moving a stage supported by a support frame in multi-degree-of-freedom, comprising;
a plurality of support units, each of which is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; a rod installed in an opening formed in at least either of the outer support plates, with its tip connected with the spherical body; and a straight motion bearing mechanism for back-and-forth movably supporting the rod;
the support units but one, being installed with their rod moving directions kept in the first and second axial directions corresponding to the lengthwise and crosswise directions of a stage, while the remaining support unit, being installed with its rod moving direction kept in the third axial direction perpendicular to the first and second axial directions;
the outer support plates closer to the stage, of the respective support units, being fixed and supported on the stage side, and members of the straight motion bearing mechanisms, being fixed and supported on the support frame side; and
rod back and forth driving mechanisms for the respective support units, being provided on the support frame side;
wherein a plurality of the support units are provided in parallel at least for either direction of the first and second axial directions; a plurality of spherical bearing support members are provided in addition to the support unit for the third axial direction; the respective spherical bearing support members can move lengthwise and crosswise respectively; and the support unit provided for the third axial direction is located away from the line passing through said plurality of spherical bearing support members.

The direction of the line passing through the plurality of spherical bearing support members is the first or second axial direction in principle, but as the case may be, it can also be any other proper direction.

The present invention also proposes to substitute the plurality of spherical bearing support members but one by support units.

In the above constitution, the present invention proposes that each of the spherical bearing support members installed together with the support units in three axial directions is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; and a rod installed in an opening formed in at least either of the outer support plates, with its tip connected with the spherical body; wherein the rod is fixed to the support frame while the outer support plate closer to the stage is fixed to the stage.

The present invention also proposes a multi-degree-of-freedom table mechanism for moving a stage supported by a support frame in multi-degree-of-freedom, comprising;
a plurality of support units, each of which is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; a rod installed in an opening formed in at least either of the outer support plates, with its tip connected with the spherical body; and a straight motion bearing mechanism for back-and-forth movably supporting the rod;
the support units but three or more, being installed with their rod moving directions kept in the first and second axial directions corresponding to the lengthwise and crosswise directions of the stage, while the remaining support units, being installed with their rod moving directions kept in the third axial direction perpendicular to the first and second axial directions;
the outer support members closer to the stage, of the respective support units, being fixed and supported respectively on the stage side, and members of the straight motion bearing mechanisms, being fixed and supported on the support frame side; and
rod back and forth driving mechanisms for the respective support units, being provided on the support frame side;
wherein a plurality of the support units are provided in parallel at least for either direction of the first and second axial directions, while three or more of the support units are provided for the third axial direction; and the three or more support units in the third axial direction are installed without being aligned in the first and second axial directions.

In the above constitution, said bearings can be properly selected from ball bearings respectively consisting of a retainer and balls retained by it, a fluid bearing using hydraulic pressure or pneumatic pressure or magnetic bearings, etc.

In the above constitution, in the support units for supporting the stage in the first, second and third axial directions, since the rods for keeping the distances between the support frame and the stage have spherical bearing mechanisms at their tips, the stage can be pivotally rotated at the corresponding portions as desired in the respective first, second and third axial directions. Furthermore, since the outer support plates constituting the lengthwise and crosswise motion mechanisms with the tips of the rods can move lengthwise and crosswise relatively in certain ranges in the respective first, second and third axial directions, the rods can be driven back and forth in the respective axial directions. So, when the stage is moved by the tips of rods at the corresponding portions, the respective rods can absorb the changes of relative positional relations caused by the lengthwise and crosswise movement and pivotal rotation of the stage.

Embodiments of the present are described below with reference to the attached drawings,

Fig. 1 is a vertical sectional view showing an embodiment of the support unit of the present invention.

Fig. 2 is a vertical sectional view showing the embodiment of Fig. 1 in an action state different from that of Fig. 1.

Fig. 3 is a vertical sectional view showing the embodiment of Fig. 1 in an action state different from those of Figs. 1 and 2.

Fig. 4 is a partially cutaway plan view showing a first embodiment of the multi-degree-of-freedom table mechanism using the support units of the present invention.

Fig. 5 is a sectional view of Fig. 4 seen according line A-A in Fig. 4.

Fig. 6 is a plan view showing a state shifted by action from the state of Fig. 4.

Fig. 7 is a plan view showing another state shifted by action from the state of Fig. 4.

Fig. 8 is a plan view showing a further other state shifted by action from the state of Fig. 4.

Fig. 9 is a partially cutaway plan view showing a second embodiment of the multi-degree-of-freedom table mechanism using the support units of the present invention.

Fig. 10 is a sectional view of Fig. 9 according line B-B in Fig. 9.

Fig. 11 is a plan view showing a state shifted by action from the state of Fig. 9.

Fig. 12 is a vertical sectional view showing another embodiment of the support unit of the present invention.

Fig. 13 is a vertical sectional view showing a further other embodiment of the support unit of the present invention.

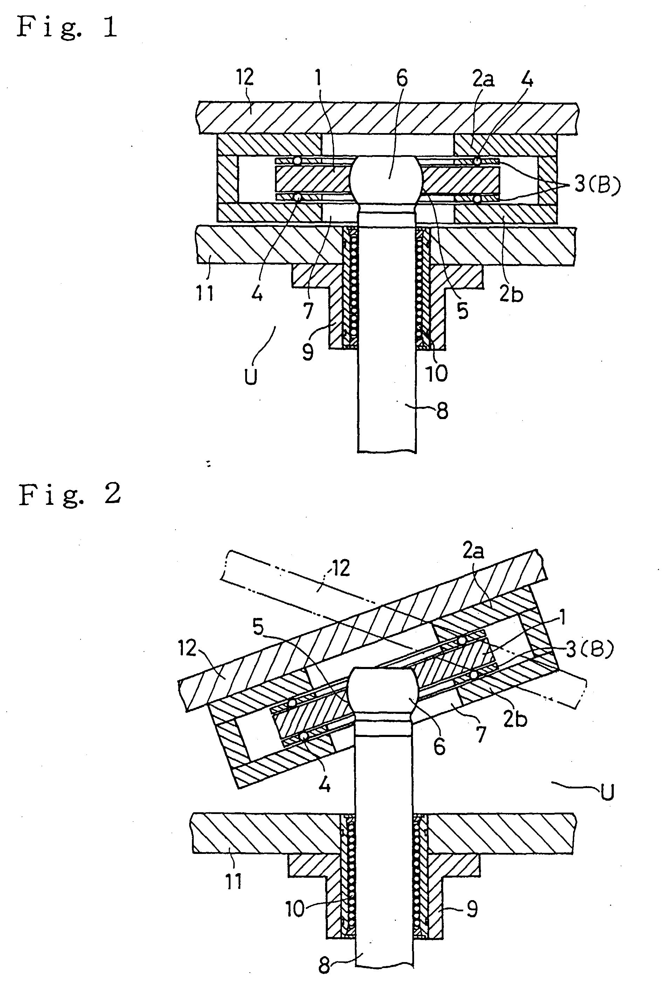

Figs. 1 to 3 show an embodiment of a support unit U of the present invention.

In these drawings, symbol 1 denotes an inner support plate, and outer support plates 2a and 2b are integrally combined with the inner support plate 1 held between them. In this case, between the respective outer support plates 2a and 2b and the inner support plate 1, ball bearings respectively consisting of a retainer 3 and balls retained by it are installed as bearings B to allow the inner support plate 1 to move between the outer support plates 2a and 2b. That is, these elements constitute a lengthwise and crosswise motion mechanism.

The inner support plate 1 has a spherical face 5 formed at the center, and the spherical face 5 is slidably engaged with a spherical body 6, to constitute a spherical bearing mechanism. On the other hand, the outer support plate 2b has an opening 7 formed at the center, and a rod 8 installed through the opening 7 is connected at its tip with the spherical body 6. In this embodiment, the spherical body 6 is truncated at the front end and the rear end in the axial direction, to be flat.

Symbol 9 denotes a cylinder to have the rod 8 passed through it, and between the cylinder 9 and the rod 8, balls 10 movably held along a circulation passage not illustrated are installed to constitute a straight motion bearing mechanism which supports the rod 8 in such a manner that the rod 8 can be moved back and forth in the cylinder 9.

When the support unit U with the above structure is used as a component of a table mechanism, the cylinder 9 is fixed in a support frame region 11, and the outer support plate 2a is fixed to a stage region 12. Furthermore, though not illustrated in Figs. 1 to 3, a rod back and forth drive mechanism 15 for driving the rod 8 back and forth in the cylinder 9, hence in the support frame region 11 is installed in the support frame.

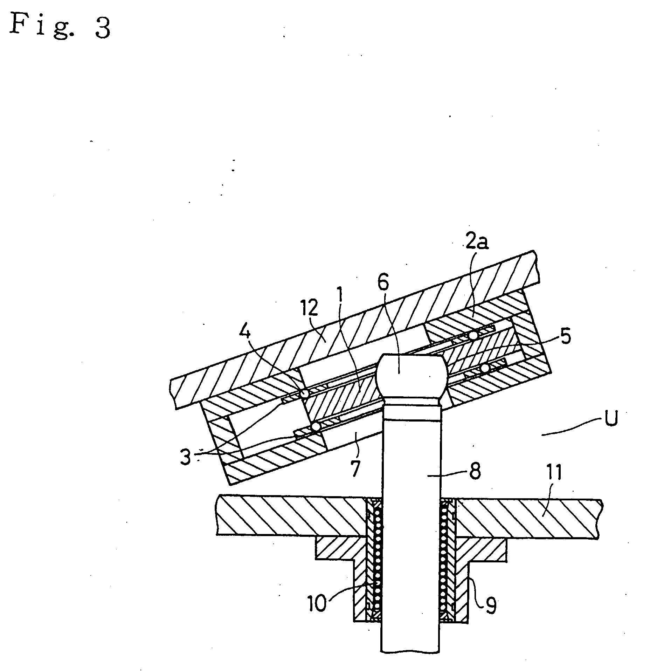

In the above constitution, if the rod 8 is driven forward in the state of Fig. 1, the stage region 12 can be driven to be apart from the support frame region 11 as shown in Fig. 2. At a proper position with the stage region 12 kept away from the support frame region 11, as shown in Fig. 2, the stage region 12 can be tilted up to a predetermined angle against the axial direction of the rod 8, and as shown in Fig. 3, the central position of the outer support plates 2a and 2b can be moved lengthwise and crosswise against the tip position of the rod 8.

However, for example in the state of Fig. 1, when the rod 8 is fixed at a proper position, the stage region 12 cannot be driven against the support frame region 11 in the axial direction of the rod 8.

By using the support unit U described above, a multi-degree-of-freedom table mechanism can be easily composed as described below.

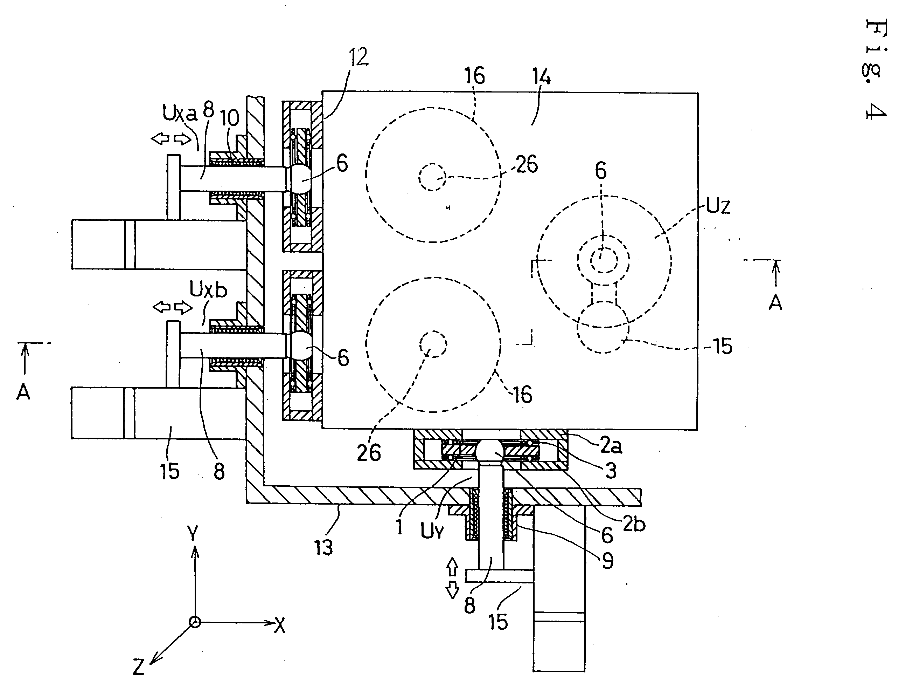

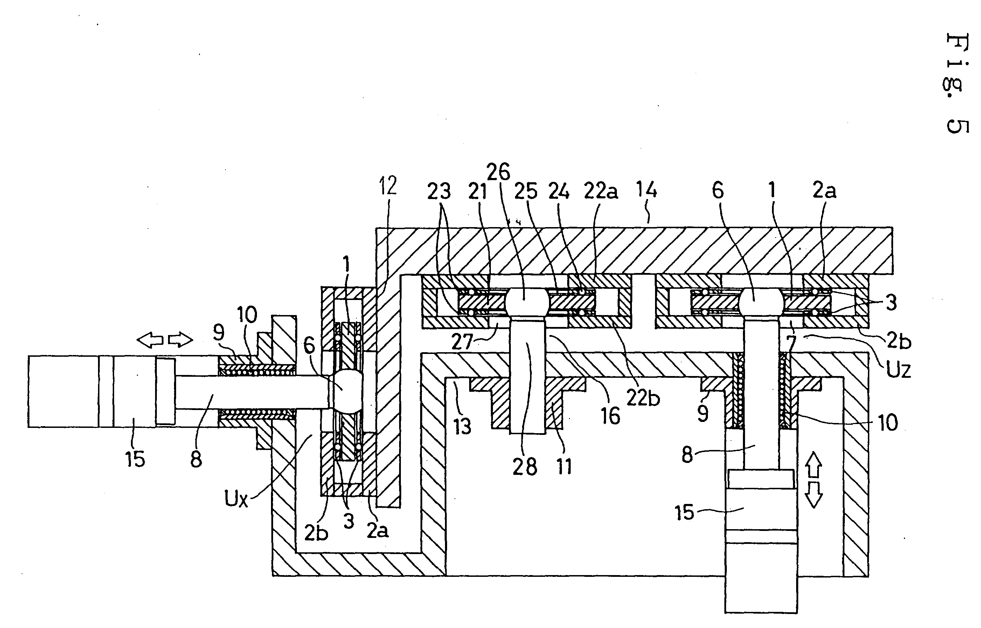

Figs. 4 and 5 show an embodiment of a four-degree-of-freedom table mechanism using four support units U with the structure described above. Fig. 4 is a plan view, and Fig. 5 is an A-A line sectional view of Fig. 4. In these drawings, symbol 13 denotes a support frame and 14 denotes a stage. The stage 14 is supported by the support units U on the support frame 13. In this embodiment, rods 8 are installed to be driven in the directions of first axis (X axis) and second axis (Y axis) corresponding to the lengthwise and crosswise movement of the stage 14 and in the direction of third axis (Z axis) perpendicular to these first and second axes, and the outer support plates 2a of the respective support units Ux, Uy and Uz are fixed to the stage 14 for supporting it, and the cylinders as components of the straight motion bearing mechanisms are fixed to the support frame 13 for supporting it. As shown in the representation of coordinate axes, the X axial direction is the horizontal direction of Figs. 4 and 5, and the Y axial direction is the vertical direction of Fig. 4. The Z axial direction is the vertical direction of Fig. 5. Hereinafter, the first, second and third axes will be respectively called X, Y and Z axes.

In the above constitution, at least in either direction of X axial direction and Y axial direction, for example in X axial direction in the case of Fig. 4, two support units Ux are installed between the support frame 13 and the stage 14, with their rods 8 turned in X axial direction. Hereinafter, as required, the support units Ux installed in X axial direction will be distinguished by adding subscripts a and b.

As illustrated, the stage 14 is supported in Z axial direction by a plurality of spherical bearing support members 16 in addition to the support unit Uz, in order that the portions supported by the spherical bearing support members 16 cannot be changed in height against the support frame 13. The spherical bearing support members 16 can be moved lengthwise and crosswise by the mechanisms described later. In this embodiment, the direction of the straight line passing through the two spherical bearing support members 16 is Y direction, and the support unit Uz is located at a position apart from the straight line.

Said spherical bearing support members 16 have a structure as shown in Fig. 5 for example. The structure is partially the same as that of the support units U. That is, each of the spherical bearing support members 16 has two outer support plates 22a and 22b integrally combined with an inner support plate 21 held between them, and balls 24 retained by retainers 23 are provided between the inner support plate 21 and the respective outer support plates 22a and 22b, to constitute a lengthwise and crosswise motion mechanism. Furthermore, a spherical face 25 formed in the inner support plate 21 and a spherical body 26 slidably engaged with the spherical face 25 constitute a spherical bearing mechanism, and an opening 27 is formed in at least one of the outer supports plates, i.e., the outer support plate 22b in this embodiment, to have a rod 28 installed through it, with the tip of the rod 28 connected with the spherical body 6. In this constitution, the rods 28 are fixed to the support frame region 11, and the outer support plates closer to the stage, as components of the lengthwise and crosswise motion mechanisms are fixed to the stage region 12, to support the stage 14 in such a manner that the stage cannot be changed in height at the portions of the spherical bearing support members 16 against the support frame 13.

On the other hand, for the plurality of support units U, back and forth drive mechanisms 15 for the rods 8 are installed in the support frame 13. Each of the back and forth drive mechanism 15 can be a linear actuator using a hydraulic cylinder to drive the rod back and forth, or using a mechanism to drive a female thread member engaged with a threaded shaft, etc. Hereinafter the respective back and forth drive mechanisms 15 will be distinguished, as required, by adding subscripts x, y and z corresponding to the respective axes.

The action of the table mechanism with the above structure is described below.

In the state shown in Figs. 4 and 5, when none of the back and forth drive mechanisms 15 is actuated, the stage 14 is prevented from moving in the respective directions by the support units Ux for X axial direction, the support unit Uy for Y axial direction and the support unit Uz and the spherical bearing support members 16 for Z axial direction. As a result, the stage 14 is also prevented from pivotally rotating around the respective axes. Therefore, the stage 14 is supported in a fixed state on the support frame 13 and can support a load.

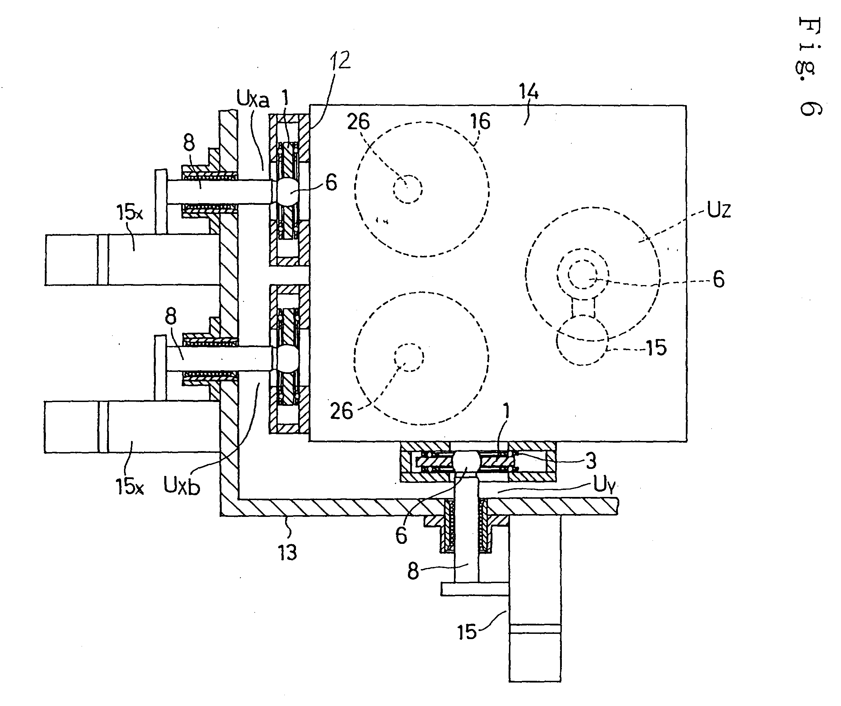

In this state, if the back and forth drive mechanisms 15x of the support units Uxa and Uxb for X axial direction are simultaneously actuated to drive the respective rods 8 in the positive direction of X axis, i.e., rightward in the drawing, the rods 8 press the region 12 of the stage 14 through their spherical bodies 6, spherical faces 5, inner support plates 1, balls 4 and outer support plates 2b. In this case, since the support unit Uy for Y axial direction and the support unit Uz for Z axial direction can be moved in X axial direction through their lengthwise and crosswise motion mechanisms, the stage 14 can be smoothly moved in the positive direction of X axis together with the movement of the rods 8, to reach the state shown in Fig. 6. If the rods 8 are driven in the negative direction of X axis contrary to the above, the stage 14 can be moved in the negative direction of X axis by action similar to the above.

In the state shown in Figs. 4 and 5, if the back and forth drive mechanism 15y of the support unit Uy for Y axial direction is actuated to move the stage 14 in the positive direction of Y axis, since the support units Ux for X axial direction and the support unit Uz for Z direction can be moved in Y direction through their lengthwise and crosswise motion mechanisms, the stage 14 can be smoothly moved in the positive direction of Y axis, together with the rod 8. If the back and forth drive mechanism 15y is driven reversely, the stage can be moved in the negative direction of Y axis. Since the movement in Y axis direction is similar to that in X axis, the illustration of the movement as a drawing is omitted.

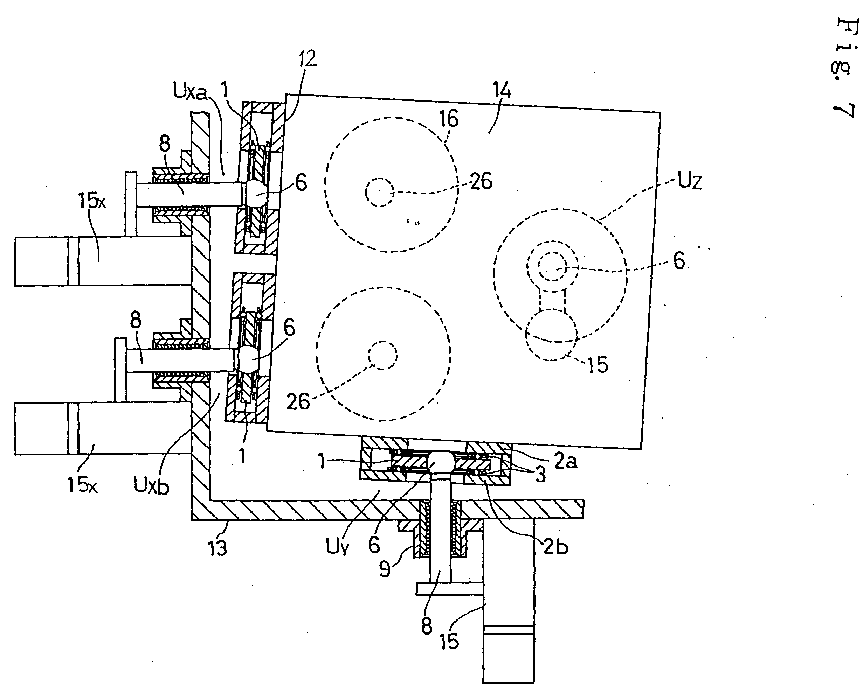

In the state shown in Figs. 4 and 5, if the rod 8 of either of the support units Uxa and Uxb for X direction, for example, the support unit Uxa is driven in the positive direction of X axis, only the spherical bearing portion of the support unit Uxa is moved, and the spherical bearing portion of the other support unit Uxb stays in its position. So, the stage 14 is rotated on the plane formed by X and Y axes, to reach the state shown in Fig. 7 for example. The rotation of the stage 14 on the plane is absorbed by the support units Ux and Uy through the pivotal rotation at the spherical bearing mechanisms and the lengthwise and crosswise motion at the lengthwise and crosswise motion mechanisms, and by the support unit Uz and the spherical bearing support members 16 through the lengthwise and crosswise motion at the lengthwise and crosswise motion mechanisms. In this case, if the rods 8 of the support units Uxa and Uxb for X axial direction are moved in the directions reverse to each other, the stages 14 can be rotated at a larger angle compared to the strokes of the rods 8. On the other hand, if the rod 8 of the support unit Uy for Y axial direction is driven while the rods 8 of the support units Uxa and Uxb for X axial direction are driven, the stage 14 can be rotated around a predetermined point. For example, if the rotation center of the stage 14 is set at the center of the stage 14, the stage 14 can be rotated around the Z axis (or θz axis) passing through the center.

In the state shown in Figs. 4 and 5, if the rod of the support unit Uz for Z axis direction is driven in the positive direction of Z axis, i.e., upward in Fig. 5, the spherical bearing portion of the support unit Uz ascends, causing the stage 14 to ascend, but since the spherical bearing portions of the spherical bearing support members 16 are kept at a certain height and since the portions kept at the certain height are aligned in Y axial direction, the stage 14 is pivotally rotated to tilt around Y axis (or θy axis) with the spherical bearing portions of the spherical bearing support members 16 as the pivot, to ascend on the right side in the drawing.

Unlike the above embodiment, if the direction of the straight line passing through the plurality of spherical bearing support members 16 is X direction, the stage 14 is pivotally rotated to tilt around the X axis (or θx axis) perpendicular to the Y axis. As the case may be, if the direction of the straight line passing through the plurality of spherical bearing support members 16 is set in any proper direction which is neither X axial direction nor Y axial direction, the stage 14 can be rotated to tilt around the proper direction.

The dislocation at the portions of the stage 14 corresponding to the support units Uxa and Uxb for X axial direction and the support unit Uy for Y axial direction can be absorbed by the lengthwise and crosswise motion mechanisms and the spherical bearing mechanisms of the respective support units U.

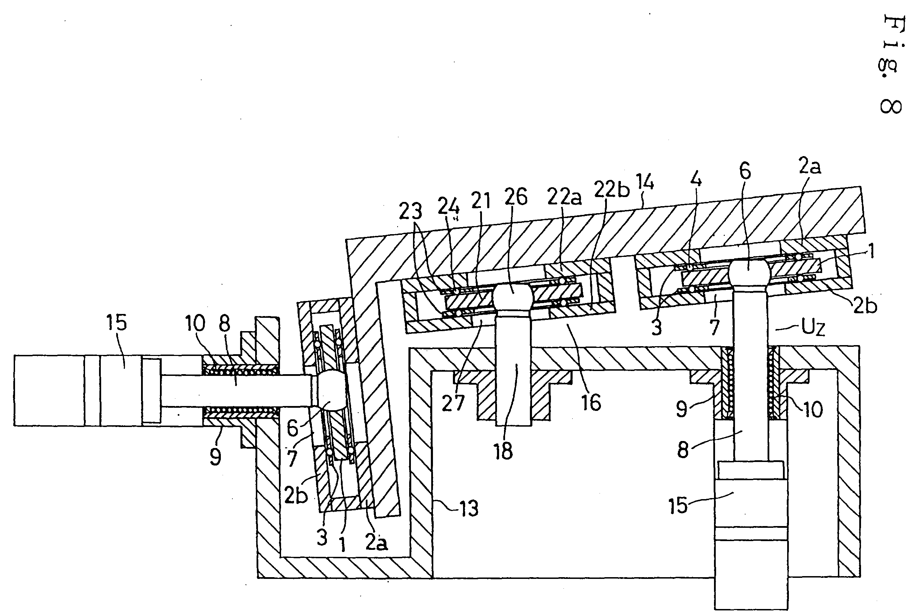

As can be seen from the above action, in the table mechanism of Figs. 4 to 8, the stage 14 can be moved in X and Y axial directions respectively, and can be rotated to tilt around Z axial (or θz axial) direction and either X or Y axial direction. Thus, a table mechanism of 4 in the degree of freedom is provided.

If the plurality of spherical bearing support members 16 but one in the table mechanism of Figs. 4 to 8 are replaced by support units U, the portion at which the stage 14 is kept at a certain height by the remaining one spherical bearing support member 16 is not a straight line, but a point, and furthermore since the number of support units Uz for Z axial direction becomes plural, the stage 14 can be moved in X and Y axial directions respectively, can be pivotally rotated around Z axis (or θz axis), and pivotally rotated to tilt around X and Y axes (θx and θy). That is, a table mechanism of 5 degrees of freedom is provided.

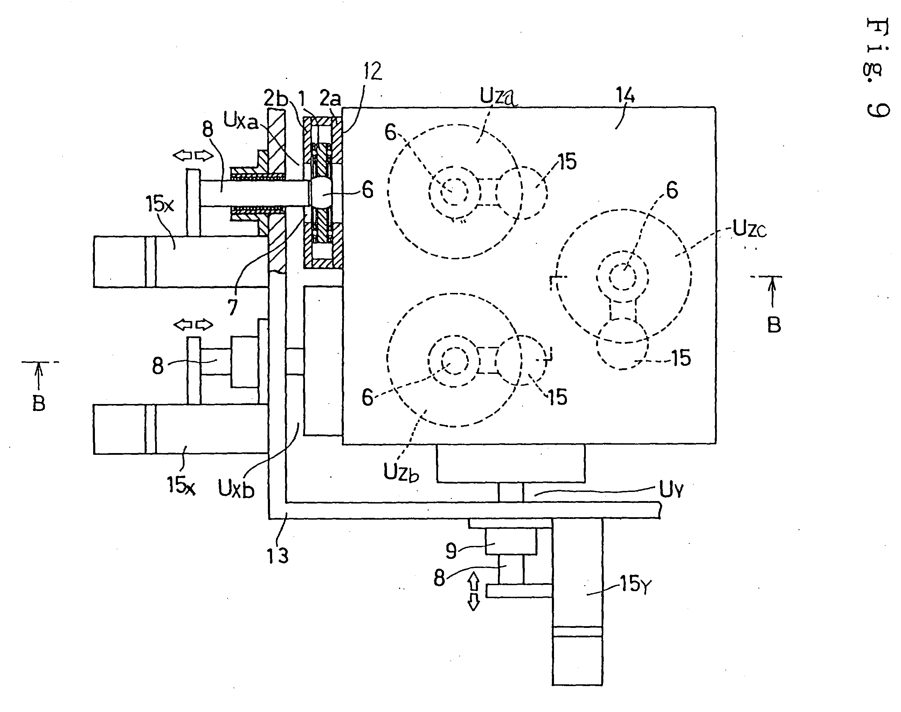

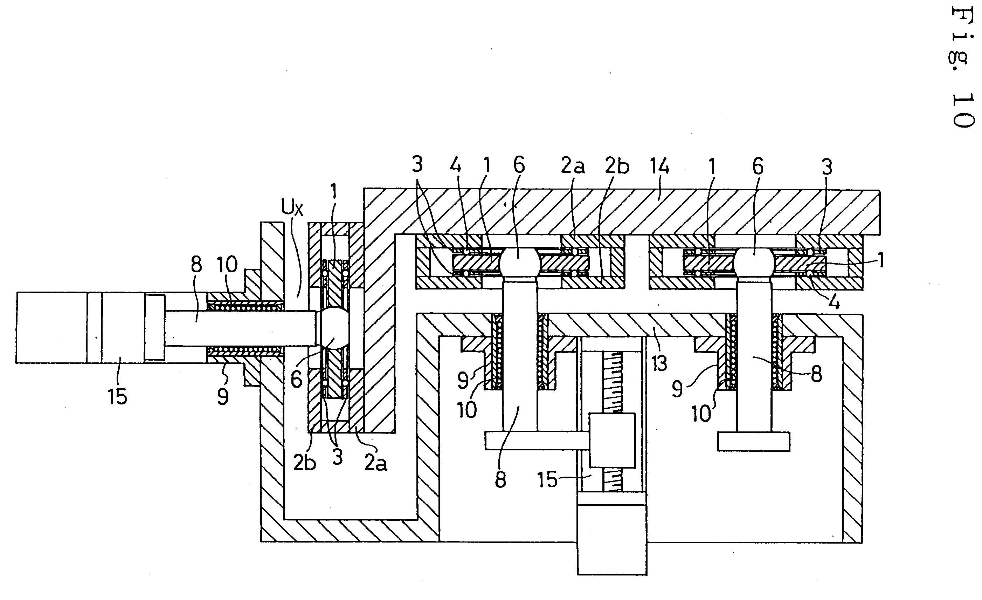

Figs. 9 to 11 show a table mechanism of 6 degrees of freedom as another embodiment. The same components as in the table mechanism shown in Figs. 4 to 8 are given the same symbols.

In the table mechanism, the support units U for X and Y axial directions are the same as those in the table mechanism described before. However, for Z axial direction, three support units Uz are installed to form an isosceles triangle, and the two support units Uza and Uzb on the base of the isosceles triangle are aligned in Y axial direction. Each of the support units Uz is provided with a back and forth drive mechanism 15.

In this constitution, if the back and forth drive mechanisms 15 of all the support units Uza, Uzb Uzc for Z axial direction are simultaneously actuated to move the respective rods 8 by an equal distance in the positive or negative direction of Z axis, the stage 14 can be moved in parallel in Z axial direction. In this case, the dislocation of the stage 14 at the portions corresponding to the support units Uxa and Uxb for X axial direction and the support unit Uy for Y axial direction can be absorbed by the lengthwise and crosswise motion mechanisms of the respective support units U.

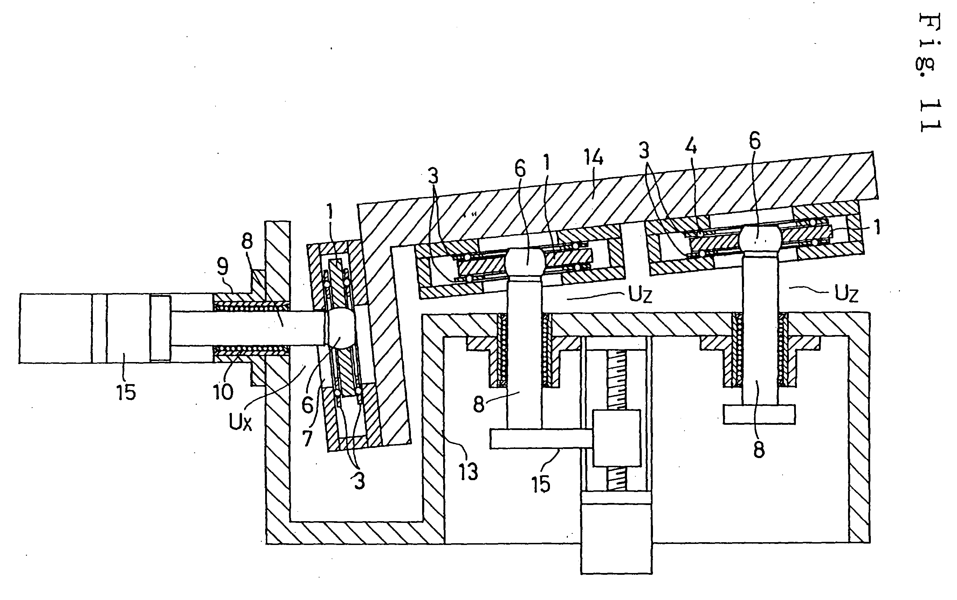

On the other hand, if the rod 8 of the support unit Uzc corresponding to the vertex of the isosceles triangle is driven in the positive direction of Z axis while the rods 8 of the support units Uza and Uzb aligned in Y axial direction are kept at a certain height, the spherical bearing portion of the support unit Uzc ascends to raise the corresponding portion of the stage 14, but the spherical bearing portions of the support units Uza and Uzb are kept at the certain height. Since the portions kept at the certain height are aligned in Y axial direction, the stage 14 is pivotally rotated around Y axis to tilt, to ascend on the right side in the drawing as shown in Fig. 11. If the rod 8 of the support unit Uzc is driven in the negative direction of Z axis contrary to the above, the stage can be tilted, to descend on the right side on the drawing.

The dislocation of the stage 14 at the portions corresponding to the support units Uxa and Uxb for X axial direction and the support unit Uy for Y axial direction in response to the tilting of the stage 14 can be absorbed by the lengthwise and crosswise motion mechanisms and spherical bearing mechanisms of the respective support units U, as in the case of the table mechanism described before.

If the rods 8 of the support units Uza, Uzb and Uzc are driven in the positive direction of Z axis in such a manner that the heights of the spherical bearing mechanisms of the support units Uza, Uzb and Uzc become linearly lower or higher in the order of support units Uza, Uzc and Uzb, the stage 14 can be pivotally rotated around the X axis perpendicular to Y axis to tilt. Also in this case, the dislocation of the stage at the portions corresponding to the support units Uxa and Uxb for X axial direction and the support unit Uy for Y axial direction can be absorbed by the lengthwise and crosswise motion mechanisms and spherical bearing mechanisms of the respective support units U, as in the case of the table mechanism described before.

Furthermore, if the above pivotal rotation around X axis and that around Y axis are used together, the stage can be tilted in any desired direction.

As can be seen from the above action, the table mechanism of Figs. 9 to 11 can be moved in X, Y and Z directions respectively and can be pivotally rotated around all the axes of X axis (θx axis), Y axis (θy axis) and Z axis (θz axis). That is, a table mechanism of 6 degrees of freedom is provided.

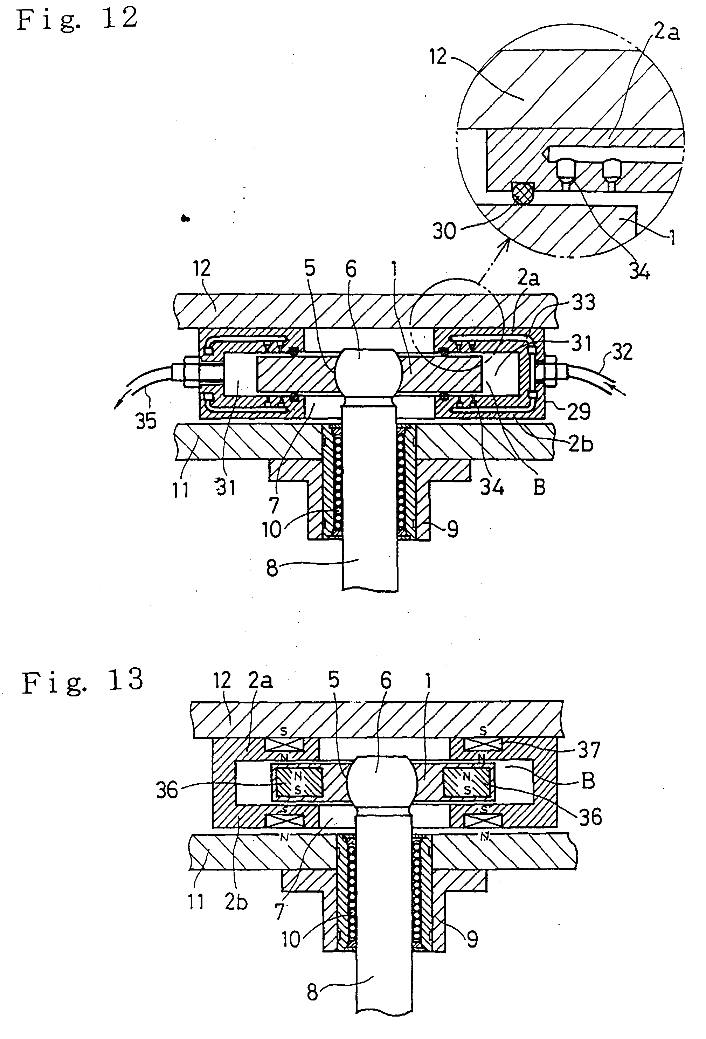

Figs. 12 and 13 show another embodiment of the support unit U of the present invention. In this embodiment, the bearings only are different from those shown in Figs. 1 to 3. Therefore, the same components as those in Figs. 1 to 3 are given the same symbols, to avoid double explanation.

In Fig. 12, a fluid bearing is used as the bearings B. The two outer support plates 2a and 2b with the inner support plate 1 held between them are integrally combined, being hermetically sealed by a circumferential side plate 29. Inside the outer support plates 2a and 2b, O rings 30 are fitted to contact the inner support plate 1. As a result, outside the O rings 30, an annular fluid filled space 31 is formed by the inner support plate, the outer support plates 2a and 2b and the side plate 29. At one point outside the side plate 29, a fluid supply pipe 32 extending from a fluid supply device (not illustrated) such as a hydraulic pump or pneumatic pump is connected, and a fluid supply channel 33 communicating to the fluid supply pipe 32 is formed in the side plate 29, and the outer support plates 2a and 2b. From the fluid supply channel 33 of the outer support plates 2a and 2b, a plurality of nozzles 34 are annularly installed on the inner support plate 1 side. On the other hand, outside the side plate 29 at a point opposite to the fluid supply pipe 32, a fluid discharge pipe 35 is connected to communicate to the fluid filled space 31.

In this constitution, if the fluid is oil, the oil supplied from the hydraulic pump through the fluid supply pipe 32 to the fluid supply channel 33 flows toward the inner support plate 1 from the plurality of nozzles 34 and goes through the clearances between the inner support plate 1 and the respective outer support plates 2a and 2b into the fluid filled space 31. The oil is then discharged from the fluid filled space 31 through the fluid discharge pipe 35, and returned to the hydraulic pump for reutilization. In this case, the oil acts to maintain the respective clearances between the inner support plate 1 and the respective outer support plates 2a and 2b by its pressure. Therefore, the outer plates 2a and 2b can be smoothly moved lengthwise and crosswise against the inner support plate 1.

Even if air is used as the fluid, the outer support plates can be smoothly moved lengthwise and crosswise against the inner support plate in the action similar to the above, but in the case of air, the air discharged from the fluid filled space 31 through the fluid discharge pipe 35 is not returned for reutilization, and can be diffused into open air.

Fig. 13 shows a case of using magnetic bearings as the bearings B. In the inner support plate 1, a permanent magnet 36 is annularly installed to form the magnetic poles in the directions shown in the drawing, and in the outer support plates 2a and 2b, permanent magnets or electromagnets 37 are annularly installed to form the same polarity as that of the permanent magnet 36 they face.

In this constitution, the repulsion between the magnetic poles of the same polarity is used to keep the respective outer support plates away from contacting the inner support plate, so that the outer support plates 2a and 2b can be smoothly moved lengthwise and crosswise against the inner support plate 1.

The present invention is as described above. So, compared to the conventional table mechanism with a required degree of freedom formed by combining individual motion mechanisms, the multi-degree-of-freedom table mechanism of the present invention has the following effects.
a. The number of parts is small.
b. The height from the support frame to the stage can be kept low.
c. The mechanism does not occupy a large space.
d. Assembling requires less manhours.
e. It is easy to achieve a high assembling accuracy.

## Claims

1. A multi-degree-of-freedom table support unit, comprising a lengthwise and crosswise motion mechanism with two outer support plates (2a, 2b) integrally combined with an inner support plate (1) held between them, and with bearings (3) installed between the inner support plate and the respective outer support plates; a spherical bearing mechanism consisting of a spherical face (5) formed in the inner support plate (1) and a spherical body (6) slidably engaged with the spherical face; a rod (8) installed in an opening formed in at least either of the outer support plates, with its tip connected with the spherical body; and a straight motion bearing mechanism (9) for back-and-forth movably supporting the rod.

2. A multi-degree-of-freedom table support unit, according to claim 1, wherein the bearings are ball bearings, each consisting of a retainer and balls retained by it.

3. A multi-degree-of-freedom table support unit, according to claim 1, wherein the bearings are a fluid bearing using hydraulic pressure or pneumatic pressure.

4. A multi-degree-of-freedom table support unit, according to claim 1, wherein the bearings are magnetic bearings.

5. A multi-degree-of-freedom table mechanism for moving a stage supported by a support frame in multi-degree-of-freedom, comprising;
a plurality of support units, each of which is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; a rod installed in an opening formed in at least either of the outer support plates, with its tip connected with the spherical body; and a straight motion bearing mechanism for back-and-forth movably supporting the rod;
the support units but one, being installed with their rod moving directions kept in the first and second axial directions corresponding to the lengthwise and crosswise directions of the stage, while the remaining support unit, being installed with its rod moving direction kept in the third axial direction perpendicular to the first and second axial directions;
the outer support plates closer to the stage, of the respective support units, being fixed and supported on the stage side, and members of the straight motion bearing mechanisms, being fixed and supported on the support frame side; and
rod back and forth driving mechanisms for the respective support units, being provided on the support frame side;
wherein a plurality of the support units are provided in parallel at least for either direction of the first and second axial directions; a plurality of spherical bearing support members are provided in addition to the support unit for the third axial direction; the respective spherical bearing support members can move lengthwise and crosswise respectively; and the support unit provided for the third axial direction is located away from the line passing through said plurality of spherical bearing support members.

6. A multi-degree-of-freedom table mechanism, according to claim 5, wherein the direction of the line passing through the plurality of spherical bearing support members is the first or second axial direction.

7. A multi-degree-of-freedom table mechanism, according to claim 5 or 6, wherein the plurality of spherical bearing support members but one are substituted by support units.

8. A multi-degree-of-freedom table mechanism, according to any one of claims 5 through 7, wherein each of the spherical bearing support members is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; and a rod installed in an opening formed in at least either of the outer support plates, with its tip connected with the spherical body; wherein the rod is fixed to the support frame while the outer support plate closer to the stage is fixed to the stage.

9. A multi-degree-of-freedom table mechanism for moving a stage supported by a support frame in multi-degree-of-freedom, comprising;
a plurality of support units, each of which is composed of a lengthwise and crosswise motion mechanism with two outer support plates integrally combined with an inner support plate held between them, and with bearings installed between the inner support plate and the respective outer support plates; a spherical bearing mechanism consisting of a spherical face formed in the inner support plate and a spherical body slidably engaged with the spherical face; a rod installed in an opening formed in at least either of the outer support plates, with its tip connected with the spherical body; and a straight motion bearing mechanism for back-and-forth movably supporting the rod;
the support units but three or more, being installed with their rod moving directions kept in the first and second axial directions corresponding to the lengthwise and crosswise directions of the stage, while the remaining support units, being installed with their rod moving directions kept in the third axial direction perpendicular to the first and second axial directions;
the outer support members respectively closer to the stage, of the respective support units, being fixed and supported on the stage side, and members of the straight motion bearing mechanisms, being fixed and supported on the support frame side; and
rod back and forth driving mechanisms for the respective support units, being provided on the support frame side;
wherein a plurality of the support units are provided in parallel at least for either direction of the first and second axial directions, while three or more of the support units are provided for the third axial direction; and the three or more support units in the third axial direction are installed without being aligned in the first and second axial directions.

10. A multi-degree-of-freedom table mechanism, according to any one of claims 5 through 9, wherein the bearings are ball bearings, each consisting of a retainer and balls retained by it.

11. A multi-degree-of-freedom table mechanism, according to any one of claims 5 through 9, wherein the bearings are a fluid bearing using hydraulic pressure or pneumatic pressure.

12. A multi-degree-of-freedom table mechanism, according to any one of claims 5 through 9, wherein the bearings are magnetic bearings.

## Patentansprüche

1. Unterstützungseinheit für einen Tisch mit mehreren Freiheitsgraden, umfassend einen Bewegungsmechanismus in Längsrichtung und in Querrichtung mit zwei äußeren Stützplatten (2a, 2b), welche mit einer inneren, zwischen diesen gehaltenen Stützplatte (1) zusammenhängend verbunden sind, und mit Lagern (3), die zwischen der inneren Stützplatte und den jeweiligen äußeren Stützplatten installiert sind; einen kugelförmigen Lagermechanismus, welcher eine in der inneren Stützplatte (1) ausgebildete kugelförmige Fläche (5) und einen verschiebbar mit der kugelförmigen Fläche zusammenwirkenden kugelförmigen Körper (6) aufweist; eine Stange (8), welche in einer Öffnung angebracht ist, die in wenigstens einer der äußeren Stützplatten ausgebildet ist, wobei die Spitze der Stange mit dem kugelförmigen Körper verbunden ist; und einen geradlinig bewegbaren Lagermechanismus (9) für ein hin- und herbewegbares Abstützen der Stange.

2. Unterstützungseinheit für einen Tisch mit mehreren Freiheitsgraden nach Anspruch 1, **dadurch gekennzeichnet, daß** die Lager Kugellager sind, welche einen Halter und dadurch aufgenommene Kugeln umfassen.

3. Unterstützungseinheit für einen Tisch mit mehreren Freiheitsgraden nach Anspruch 1, **dadurch gekennzeichnet, daß** die Lager ein Fluidlager sind, welches hydraulischen Druck oder pneumatischen Druck verwendet.

4. Unterstützungseinheit für einen Tisch mit mehreren Freiheitsgraden nach Anspruch 1, **dadurch gekennzeichnet, daß** die Lager magnetische Lager sind.

5. Mechanismus für einen Tisch mit mehreren Freiheitsgraden, zum Bewegen einer durch einen Stützrahmen abgestützten Plattform in mehreren Freiheitsgraden, umfassend:
mehrere Unterstützungseinheiten, von denen jede besteht aus einem Bewegungsmechanismus in Längsrichtung und Querrichtung mit zwei äußeren Stützplatten, die mit einer inneren, zwischen diesen gehaltenen Stützplatte zusammenhängend verbunden sind, und mit Lagern, die zwischen der inneren Stützplatte und den jeweiligen äußeren Stützplatten installiert sind; einem kugelförmigen Lagermechanismus, welcher eine in der inneren Stützplatte ausgebildete kugelförmige Fläche und einen verschiebbar mit der kugelförmigen Fläche zusammenwirkenden kugelförmigen Körper aufweist; einer Stange, welche in einer Öffnung angebracht ist, die in wenigstens einer der äußeren Stützplatten ausgebildet ist, wobei die Spitze der Stange mit dem kugelförmigen Körper verbunden ist; und einem geradlinig bewegbaren Lagermechanismus für ein hin- und herbewegbares Abstützen der Stange;
die Unterstützungseinheiten bis auf eine, welche derart installiert sind, daß deren Stangenbewegungsrichtungen in der ersten und der zweiten Axialrichtung gehalten sind, welche der Längsrichtung und der Querrichtung der Plattform entsprechen, während die verbleibende Unterstützungseinheit derart installiert ist, daß ihre Stangenbewegungsrichtung in der dritten Axialrichtung senkrecht zu der ersten und der zweiten Axialrichtung gehalten ist;
die äußeren, näher zur Plattform angeordneten Stützplatten der jeweiligen Unterstützungseinheiten, welche auf der Plattformseite befestigt und abgestützt sind, und die Körper der geradlinig bewegbaren Lagermechanismen, welche auf der Seite des Stützrahmens befestigt und abgestützt sind; und
Antriebsmechanismen zum Vor- und Zurückbewegen der Stange für die jeweiligen Unterstützungseinheiten, welche auf der Seite des Abstützrahmens vorgesehen sind;
wobei mehrere der Unterstützungseinheiten parallel wenigstens für eine der ersten und zweiten Axialrichtungen vorgesehen sind; mehrere kugelförmige Lagerabstützkörper zusätzlich zu der Unterstützungseinheit für die dritte Axialrichtung vorgesehen sind; die jeweiligen kugelförmigen Lagerabstützkörper jeweils in Längsrichtung und in Querrichtung bewegt werden können; und die für die dritte Axialrichtung vorgesehene Unterstützungseinheit abgelegen von der Linie angeordnet ist, welche durch die mehreren kugelförmigen Lagerabstützkörper verläuft.

6. Mechanismus für einen Tisch mit mehreren Freiheitsgraden nach Anspruch 5, **dadurch gekennzeichnet, daß** die Richtung der durch die mehreren kugelförmigen Lagerabstützkörper verlaufenden Linie die erste oder zweite Axialrichtung ist.

7. Mechanismus für einen Tisch mit mehreren Freiheitsgraden nach Anspruch 5 oder 6, **dadurch gekennzeichnet, daß** die mehreren kugelförmigen Lagerabstützkörper bis auf einen durch Unterstützungseinheiten ersetzt sind.

8. Mechanismus für einen Tisch mit mehreren Freiheitsgraden nach einem der Ansprüche 5 bis 7, **dadurch gekennzeichnet, daß** jeder der kugelförmigen Lagerabstützkörper besteht aus einem Bewegungsmechanismus in Längsrichtung und Querrichtung mit zwei äußeren Stützplatten, die mit einer inneren, zwischen diesen gehaltenen Stützplatte zusammenhängend verbunden sind, und mit Lagern, die zwischen der inneren Stützplatte und den jeweiligen äußeren Stützplatten installiert sind; einem kugelförmigen Lagermechanismus, welcher eine in der inneren Stützplatte ausgebildete kugelförmige Fläche und einen verschiebbar mit der kugelförmigen Fläche zusammenwirkenden kugelförmigen Körper aufweist; einer Stange, welche in einer Öffnung angebracht ist, die in wenigstens einer der äußeren Stützplatten ausgebildet ist, wobei die Spitze der Stange mit dem kugelförmigen Körper verbunden ist; wobei die Stange an dem Stützrahmen befestigt ist, während die äußere, näher zur Plattform angeordnete Stützplatte an der Plattform befestigt ist.

9. Mechanismus für einen Tisch mit mehreren Freiheitsgraden, zum Bewegen einer durch einen Stützrahmen abgestützten Plattform in mehreren Freiheitsgraden, umfassend:
mehrere Unterstützungseinheiten, von denen jede besteht aus einem Bewegungsmechanismus in Längsrichtung und Querrichtung mit zwei äußeren Stützplatten, die mit einer inneren, zwischen diesen gehaltenen Stützplatte zusammenhängend verbunden sind, und mit Lagern, die zwischen der inneren Stützplatte und den jeweiligen äußeren Stützplatten installiert sind; einem kugelförmigen Lagermechanismus, welcher eine in der inneren Stützplatte ausgebildete kugelförmige Fläche und einen verschiebbar mit der kugelförmigen Fläche zusammenwirkenden kugelförmigen Körper aufweist; einer Stange, welche in einer Öffnung angebracht ist, die in wenigstens einer der äußeren Stützplatten ausgebildet ist, wobei die Spitze der Stange mit dem kugelförmigen Körper verbunden ist; und einem geradlinig bewegbaren Lagermechanismus für ein hin- und herbewegbares Abstützen der Stange;
die Unterstützungseinheiten bis auf drei oder mehr, welche derart installiert sind, daß deren Stangenbewegungsrichtungen in der ersten und der zweiten Axialrichtung gehalten sind, welche der Längsrichtung und der Querrichtung der Plattform entsprechen, während die verbleibenden Unterstützungseinheiten derart installiert sind, daß ihre Stangenbewegungsrichtungen in der dritten Axialrichtung senkrecht zu der ersten und der zweiten Axialrichtung gehalten sind;
die äußeren, jeweils näher zur Plattform angeordneten Stützkörper der jeweiligen Unterstützungseinheiten, welche auf der Plattformseite befestigt und abgestützt sind, und die Körper der geradlinig bewegbaren Lagermechanismen, die auf der Seite des Stützrahmens befestigt und abgestützt sind; und
Antriebsmechanismen zum Vor- und Zurückbewegen der Stange für die jeweiligen Unterstützungseinheiten, welche auf der Seite des Abstützrahmens vorgesehen sind;
wobei mehrere der Unterstützungseinheiten parallel wenigstens für eine der ersten und zweiten Axialrichtungen vorgesehen sind, während drei oder mehr der Unterstützungseinheiten für die dritte Axialrichtung vorgesehen sind; und die drei oder mehr Unterstützungseinheiten in der dritten Axialrichtung installiert sind, ohne daß sie in der ersten oder zweiten Axialrichtung ausgerichtet sind.

10. Mechanismus für einen Tisch mit mehreren Freiheitsgraden nach einem der Ansprüche 5 bis 9, **dadurch gekennzeichnet, daß** die Lager Kugellager sind, welche einen Halter und durch diesen aufgenommene Kugeln umfassen.

11. Mechanismus für einen Tisch mit mehreren Freiheitsgraden nach einem der Ansprüche 5 bis 9, **dadurch gekennzeichnet, daß** die Lager ein Fluidlager sind, welches hydraulischen Druck oder pneumatischen Druck verwendet.

12. Mechanismus für einen Tisch mit mehreren Freiheitsgraden nach einem der Ansprüche 5 bis 9, **dadurch gekennzeichnet, daß** die Lager magnetische Lager sind.

## Revendications

1. Unité de support de table à plusieurs degrés de liberté, comprenant un mécanisme à mouvement longitudinal et transversal qui comporte deux plaques de support extérieures (2a,2b) solidairement combinées avec une plaque de support intérieure (1) tenue entre elles, et des moyens de porter (3) installés entre la plaque de support intérieure et les plaques de support extérieures respectives ; un mécanisme de porter sphérique consistant en une face sphérique (5) formée dans la plaque de support intérieure (1) et un corps sphérique (6) en contact glissant avec la face sphérique ; une tige (8) installée dans une ouverture ménagée dans au moins une quelconque des plaques de support extérieures et dont l'extrémité est reliée au corps sphérique ; et un mécanisme de porter à mouvement rectiligne (9) pour supporter la tige de façon déplaçable en va-et-vient.

2. Unité de support de table à plusieurs degrés de liberté selon la revendication 1, dans laquelle les moyens de porter sont des roulements à billes constitués chacun d'un boîtier et de billes retenues par celui-ci.

3. Unité de support de table à plusieurs degrés de liberté selon la revendication 1, dans laquelle les moyens de porter sont un palier à fluide utilisant une pression hydraulique ou une pression pneumatique.

4. Unité de support de table à plusieurs degrés de liberté selon la revendication 1, dans laquelle les moyens de porter sont des paliers magnétiques.

5. Mécanisme de table à plusieurs degrés de liberté pour déplacer un plateau supporté par un châssis de support avec plusieurs degrés de liberté, comprenant:
une pluralité d'unités de support dont chacune est composée d'un mécanisme à mouvement longitudinal et transversal comportant deux plaques de support extérieures solidairement combinées avec une plaque de support intérieure tenue entre elles, et avec des moyens de porter installés entre la plaque de support intérieure et les plaques de support extérieures respectives ; un mécanisme de porter sphérique consistant en une face sphérique formée dans la plaque de support intérieure et un corps sphérique en contact glissant avec la face sphérique ;
une tige installée dans une ouverture ménagée dans au moins une quelconque des plaques de support extérieures et dont l'extrémité est'reliée au corps sphérique ; et
un mécanisme de porter à mouvement rectiligne pour supporter la tige de façon déplaçable en va-et-vient ;
les unités de support, sauf une, étant installées de sorte que leurs directions de déplacement de tige sont maintenues dans les première et deuxième directions axiales correspondant aux directions longitudinale et transversale du plateau, tandis que l'unité de support restante est installée de sorte que sa direction de déplacement de tige est maintenue dans la troisième direction axiale perpendiculaire aux première et deuxième directions axiales ;
les plaques de support extérieures les plus proches du plateau, qui font partie des unités de support respectives,étant fixées et supportées du côté plateau, et les éléments des mécanismes de porter à mouvement rectiligne étant fixés et supportés du côté châssis de support ; et
des mécanismes d'entraînement de tige en va-et-vient pour les unités de support respectives étant prévus du côté châssis de support ;
dans lequel une pluralité des unités de support sont prévues en parallèle, au moins pour une direction quelconque des première et deuxième directions axiales ; une pluralité d'éléments de support à portée sphérique sont prévus en plus de l'unité de support pour la troisième direction axiale ; les éléments de support à portée sphérique respectifs peuvent se déplacer longitudinalement et transversalement respectivement ; et l'unité de support prévue pour la troisième direction axiale est située à distance de la ligne passant par ladite pluralité d'éléments de support à portée sphérique.

6. Mécanisme de table à plusieurs degrés de liberté selon la revendication 5, dans lequel la direction de la ligne passant par la pluralité d'éléments de support à portée sphérique est la première ou la deuxième direction axiale.

7. Mécanisme de table à plusieurs degrés de liberté selon la revendication 5 ou 6, dans lequel la pluralité d'éléments de support à portée sphérique sauf un sont remplacés par des unités de support.

8. Mécanisme de table à plusieurs degrés de liberté selon une quelconque des revendications 5 à 7, dans lequel chacun des éléments de support à portée sphérique est composé d'un mécanisme à mouvement longitudinal et transversal comportant deux plaques de support extérieures solidairement combinées avec une plaque de support intérieure maintenue entre elles, et avec des moyens de porter installés entre la plaque de support intérieure et les plaques de support extérieures respectives ; d'un mécanisme de porter sphérique consistant en une face sphérique formée dans la plaque de support intérieure et un corps sphérique en contact glissant avec la face sphérique; et d'une tige passant dans une ouverture ménagée dans au moins une quelconque des plaques de support extérieures et dont l'extrémité est reliée au corps sphérique ; dans lequel la tige est fixée au châssis de support tandis que la plaque de support extérieure la plus proche du plateau est fixée au plateau.

9. Mécanisme de table à plusieurs degrés de liberté pour déplacer un plateau supporté par un châssis de support dans plusieurs degrés de liberté, comprenant :
une pluralité d'unités de support, dont chacune est composée d'un mécanisme à mouvement longitudinal et transversal comportant deux plaques de support extérieures solidairement combinées avec une plaque de support intérieur tenue entre elles, et avec des moyens de porter installés entre la plaque de support intérieure et les plaques de support extérieures respectives ; un mécanisme de porter sphérique consistant en une face sphérique formée dans la plaque de support intérieure et un corps sphérique en contact glissant avec la face sphérique ; une tige installée dans une ouverture ménagée dans au moins une quelconque des plaques de support extérieures et dont l'extrémité est reliée au corps sphérique ; et un mécanisme de portér à mouvement rectiligne pour supporter la tige de façon déplaçable en va-et-vient ;
les unités de support, sauf trois ou plus, étant installées de sorte que leurs directions de déplacement de tige sont maintenues dans les première et deuxième directions axiales correspondant aux directions longitudinale et transversale du plateau, tandis que les unités de support restantes sont installées de sorte que leurs directions de déplacement de tige sont maintenues dans la troisième direction axiale perpendiculaire aux première et deuxième directions axiales ;
les éléments de support extérieurs respectivement plus proches du plateau, qui font partie des unités de support respectives,étant fixés et supportés du côté plateau, et les éléments des mécanismes de porter à mouvement rectiligne étant fixés et supportés du côté châssis de support ; et
des mécanismes d'entraînement de tige en va-et-vient pour les unités de support respectives étant prévus du côté châssis de support ;
dans lequel une pluralité des unités de support sont prévues en parallèle, au moins pour une direction quelconque des première et deuxième directions axiales, tandis que trois des unités de support ou plus sont prévues pour la troisième direction axiale, et les trois unités de support ou plus dans la troisième direction axiale sont installées sans être alignées dans les première et deuxième directions axiales.

10. Mécanisme de table à plusieurs degrés de liberté selon une quelconque des revendications 5 à 9, dans lequel les moyens de porter sont des roulements à billes dont chacun est constitué d'un boîtier et de billes retenues par ce dernier.

11. Mécanisme de table à plusieurs degrés de liberté selon une quelconque des revendications 5 à 9, dans lequel les moyens de porter sont un palier à fluide utilisant une pression hydraulique ou une pression pneumatique.

12. Mécanisme de table à plusieurs degrés de liberté selon une quelconque des revendications 5 à 9, dans lequel les moyens de porter sont des paliers magnétiques.
